# EUROPÄISCHE PATENTSCHRIFT

(11) **EP 3 552 189 B1**
(45) Veröffentlichungstag und Bekanntmachung des Hinweises auf die Patenterteilung: **07.10.2026**
(21) Anmeldenummer: 17821777.4
(22) Anmeldetag: 27.11.2017
(51) Int. Cl.: G07C 9/25, G06F 21/32, G06F 21/35

(54) **PERSONENAUTHENTIFIZIERUNG MIT CHIPIMPLANTAT UND ZWEIFAKTORAUTHENTIFIZIERUNG**
AUTHENTICATION OF A PERSON USING A CHIP IMPLANT AND TWO-FACTOR AUTHENTICATION
AUTHENTIFICATION D'UNE PERSONNE À L'AIDE DE PUCE-IMPLANT PRÉSENTANT UNE AUTHENTIFICATION À DEUX FACTEURS

(30) Priorität: 08.12.2016 DE 102016123787
(43) Veröffentlichungstag der Anmeldung: 16.10.2019
(73) Patentinhaber: Bundesdruckerei GmbH, 10969 Berlin (DE)
(72) Erfinder: BÜTJE, Rolf, 21227 Bendestorf (DE)
(74) Vertreter: Bittner, Thomas L.
(86) Internationale Anmeldenummer: PCT/DE2017/101024
(87) Internationale Veröffentlichungsnummer: WO 2018/103791

(56) Entgegenhaltungen:
- EP-A1- 1 237 091
- EP-A2- 1 693 801
- WO-A2-2008/027626
- DE-A1- 10 203 926
- AMAL GRAAFSTRA: "Hands On", IEEE SPECTRUM, IEEE INC. NEW YORK, US, vol. 43, no. 3, 31 March 2007 (2007-03-31), pages 18 - 23, XP011172595, ISSN: 0018-9235

## Beschreibung

Die Erfindung betrifft ein Verfahren für die Authentifizierung einer Person, ein Lesegerät, eine Zugangskontrollanordnung sowie ein Chipimplantat.

### Technologischer Hintergrund

Das Prinzip der Zweifaktorauthentifizierung ist ein bekannter Ansatz, der in der Praxis üblicherweise durch Kombination von zwei der drei Faktoren Wissen, Besitz und biometrisches Merkmal realisiert wird, Die Kombination von zwei dieser Faktoren hat das Ziel, die Sicherheit der Authentifizierung zu erhöhen. Beispiele solcher Kombinationen von Faktoren im Rahmen der Zweifaktorauthentifizierung sind der Besitz einer Kontokarte sowie das Wissen einer persönlichen Identifikationsnummer (PIN), die Ermittlung eines biometrischen Merkmals im Rahmen einer Gesichtserkennung und das Wissen einer PIN für Zugangskontrollsysteme oder auch der Besitz einer Ausweiskarte und die Prüfung eines Finderabdrucks.

Allen üblichen Lösungen ist gemein, dass die zu identifizierende Person entweder eine gegenständliche Komponente und/oder die Kenntnis einer nur ihm bekannten alphanumerischen Zeichenkombination benötigt. Beide Faktoren sind risikobehaftet, da erstere gestohlen oder verloren werden kann und letztere ausgespäht oder erraten werden können. Wird die Zeichenkombination verlängert, um ein Ausspähen oder Erraten zu erschweren, steigt in der Praxis das Risiko, dass der Anwender die Zeichenkombination notiert und diese wiederum dem Diebstahl aussetzt.

Aus der EP 1 237 091 A1 ist ein Verfahren bekannt, bei dem eine in einer Kreditkarte gespeicherte PIN nach erfolgreichem Abgleich eines biometrischen Merkmals des Karteninhabers ausgelesen wird. In DE 102 03 926 A1 wird eine Chipkarte beschrieben, auf welcher zur Authentifizierung biometrische Daten des Benutzers gespeichert sind. Aus A. Graafstra, "Hands On" in IEEE Spectrum, Vol. 44, Issue 3, S. 18 bis 23, 2007 - ISSN 0018-9235 sind Chipimplantate und deren Verwendung für die physische Zutrittskontrolle bekannt. Aus der WO2008/027626 A2 ist ein Chipimplantat zur Zugangskontrolle bekannt, welches biometrische Merkmale speichert.

Die Erfindung macht es sich daher zur Aufgabe, einen verbesserten Ansatz zur Authentifizierung einer Person bereitzustellen.

### Zusammenfassung der Erfindung

Ein erster Aspekt der Erfindung löst diese Aufgabe durch ein verbessertes Verfahren für die Authentifizierung einer Person gemäß dem unabhängigen Anspruch 1.

Die Erfindung besitzt den Vorteil, dass ein Chipimplantat im Gegensatz zu einer Ausweiskarte oder einem anderen Identifikationstoken nicht verloren gehen kann. Auf diese Weise ist bereits der erste der zwei verwendeten Faktoren für die Zweifaktorauthentifizierung gesichert. Als weiterer Faktor tritt erfindungsgemäß ein biometrisches Merkmal hinzu, wobei dieses verwendet wird, um den Chip des Chipimplantats kryptographisch aufzuschließen. Das biometrische Merkmal wird also zur Authentifizierung eines Lesegerätes gegenüber dem Chipimplantat verwendet, welches mit der Übermittlung eines geschützt im Chipimplantat gespeicherten Attributes antwortet. Das Attribut stellt wiederum die Grundlage der abschließenden Authentifizierung der Person dar. Auf diese Weise werden die beiden für sich bereits mit einer hohen Sicherheit ausgestatteten Faktoren untrennbar miteinander verknüpft, wodurch ein Verfahren mit einer sehr hohen Sicherheit der Authentifizierung zur Verfügung gestellt wird. Ein weiterer Vorteil Erfindung besteht darin, dass die für die Authentifizierung verwendeten biometrischen Daten nicht in einem externen System gespeichert werden müssen, so dass etwaige datenschutzrechtliche Vorbehalte der zu authentifizierenden Person ausgeräumt werden können und ein Angriff auf ein solches externes System zur Erbeutung der hinterlegten biometrischen Daten sinnlos wird. Dadurch wird das Sicherheitsniveau des erfindungsgemäßen Authentifizierungsverfahrens zusätzlich erhöht.

Bei dem Attribut kann es sich um eine Bezeichnung der Person, einen Berechtigungsnachweis oder dergleichen handeln. Bei dem biometrischen Merkmal kann es sich beispielsweise um einen Irisscan oder einen Fingerabdruck beziehungsweise in bekannter Weise daraus abgeleitete Merkmale handeln. Solche abgeleiteten Merkmale werden üblicherweise im Zuge einer Datenreduktion einer photographischen Erfassung von Iris beziehungsweise Fingerabdruck gewonnen. Die abgeleitete Schlüsselinformation kann jedoch auch eine datentechnisch vollständige Repräsentation des erfassten biometrischen Merkmals sein.

Besonders vorteilhaft können ein oder mehrere Fingerabdrücke das biometrische Merkmal darstellen, da ein Chipimplantat häufig in die Hautfalte zwischen Daumen und Zeigefinger einer Hand implantiert wird. Dabei wird gewährleistet, dass sich das Chipimplantat bei der Erfassung des biometrischen Merkmals - hier also des wenigstens einen Fingerabdrucks - in räumlicher Nähe zu dem Chipimplantat befindet.

Das Verfahren kann einen zusätzlichen Schritt des Freigebens eines Zugangs zu einem geschützten Bereich aufweisen. Das Freigeben des Zugangs erfolgt nur dann, wenn der Schritt des Authentifizierens der Person erfolgreich abgeschlossen wurde. Bei dem geschützten Bereich kann es sich sowohl um einen virtuellen Bereich, also etwa vertrauliche Daten, als auch um eine räumliche Begebenheit wie ein Schließfach, ein Grundstück oder einen Zimmer handeln. In der zweiten Alternative kann der Schritt des Freigebens des Zugangs einen Schritt des Ansteuerns einer Schließanlage beinhalten.

Bei Ausführungsformen des erfindungsgemäßen Verfahrens kann vorgesehen sein, dass der Schritt des Authentifizierens der Person einen zusätzlichen Schritt des Vergleichens des empfangenen Attributs mit einem vorherbestimmten Referenzattribut beinhaltet. Hierbei signalisiert das Attribut selbst bereits eine Berechtigung der Person und kann direkt vom empfangenden Lesegerät geprüft werden.

Besonders bevorzugt kann der Schritt des Authentifizierens der Person einen zusätzlichen Schritt des Prüfens einer Signatur des empfangenen Attributs beinhalten. Das Prüfen der Signatur kann anhand eines bekannten öffentlichen Schlüssels erfolgen, mit dem geprüft werden kann, dass das Attribut nicht gefälscht oder verfälscht wurde. Insbesondere kann das Attribut in der Form eines kryptographisch gesicherten Zertifikats vorliegen.

Alternativ oder zusätzlich kann der Schritt des Authentifizierens der Person einen Schritt des Übermittelns des empfangenen Attributs an ein Register und einen Schritt des Empfangens eines Berechtigungssignals von dem Register in Antwort auf das übermittelte empfangene Attribut beinhalten, wobei der Schritt des Authentifizierens der Person in Abhängigkeit von dem empfangenen Berechtigungssignal erfolgt. Das Register kann beispielsweise ein Server sein, der zu den verschiedenen durch Attribute bezeichneten Personen die jeweiligen Berechtigungen speichert und auf eine Anfrage durch ein Lesegerät anhand des übermittelten empfangenen Attributs mit der Übermittlung des Berechtigungssignals reagiert. Das Berechtigungssignal kann beispielsweise als kryptographisch gesichertes Zertifikat an das Lesegerät übermittelt werden. Die Verwendung einer Signatur durch das Chipimplantat zur Absicherung des übermittelten Attributs der zu authentifizierenden Person erlaubt insbesondere bei Verwendung eines solchen Registers eine zusätzliche Absicherung, bei der das Chipimplantat das Attribut mit einem Zeitstempel versieht und anschließend signiert, so dass Angriffe auf das Register anhand eines zuvor abgehörten signierten Attributs schon wegen des veralteten Zeitstempels scheitern, weil der Zeitstempel ebenfalls durch die Signatur vor Veränderung geschützt ist. Die Verwendung eines Registers kann auch dadurch abgesichert werden, dass das Register nur eine lokal durchgeführte erfolgreiche Authentifizierung negativ überstimmen kann. Das Übermitteln des empfangenen Attributs an das Register erfolgt hierbei also unter der Bedingung einer erfolgreichen lokalen Authentifizierung, wobei das vom Register in Antwort übersandte Berechtigungssignal die erfolgreiche lokale Authentifizierung lediglich unverändert lassen oder invalidieren, nicht jedoch eine negative lokale Authentifizierung in eine positive Authentifizierung verändern kann.

Das erfindungsgemäße Verfahren kann auch einen zusätzlichen Schritt des Übermittelns eines in dem Chipimplantat zu speichernden Datensatzes an das Chipimplantat beinhalten. Bei dem Datensatz kann es sich beispielsweise um ein neues oder geändert in dem Chipimplantat zu speicherndes Attribut oder um eine elektronische Quittung für eine durch den erfolgreichen Abschluss der Authentifizierung bewirkten Vorgangs handeln.

Ein zweiter Aspekt der Erfindung betrifft Lesegerät mit einer Erfassungseinheit, einer Sende/Empfangseinheit und einer mit der Erfassungseinheit und der Sende/Empfangseinheit verbundenen Steuereinheit. Die Erfassungseinheit ist dabei dazu ausgebildet, ein biometrisches Merkmal einer Person zu erfassen. Die Sende/Empfangseinheit ist dazu ausgebildet, mit einem Chipimplantat der Person zu kommunizieren. Die Steuereinheit ist dabei dazu ausgebildet, das Verfahren des ersten Erfindungsaspektes durchzuführen. Beispielsweise kann es sich bei der Erfassungseinheit um eine Kamera oder einen Fingerabdrucksensor handeln.

Bei Verwendung eines Fingerabdrucksensors kann das Lesegerät vorteilhaft so ausgestaltet sein, dass die Sende/Empfangseinheit bei Auflegen des Fingers durch die zu authentifizierende Person auf den Fingerabdrucksensor in räumliche Nähe zu einem in die Hautfalte zwischen Zeigefinger und Daumen implantiertes Chipimplantat gelangt. Beispielsweise kann der Fingerabdrucksensor gegenüber der Sende/Empfangseinheit vertieft angeordnet sein. Ebenso ist vorstellbar, dass das Lesegerät (z.B. ähnlich einem Türgriff) von der zu authentifizierenden Person umgriffen werden muss, wobei das wie erwähnt platzierte Chipimplantat auf der Sende/Empfangseinheit und wenigstens ein Finger auf dem Fingerabdrucksensor zu liegen kommen. Hierbei kann das Lesegerät auf einer Tür oder Klappe angeordnet sein, die sich nach erfolgreicher Authentifizierung durch Zug oder Druck auf das Lesegerät öffnen lässt.

Als Lesegeräte können im Rahmen der Erfindung beispielsweise auch entsprechend eingerichtete Smartphones oder Computer angesehen werden. Für die Erfassung des biometrischen Merkmals könnten ein Fingerabdrucksensor, für die Kommunikation mit dem Chipimplantat beispielsweise eine NFC-Einheit (NFC, Near Field Communication) vorgesehen sein, wie sie insbesondere bei Smartphones weit verbreitete Ausstattungsmerkmale sind. Ein Fingerabdrucksensor sowie eine räumlich dazu geeignet angeordnete Sende/Empfangseinheit für die Kommunikation mit dem Chipimplantat könnten problemlos auch in einer Computertastatur angeordnet werden. Eine Anmeldung an dem Smartphone oder Computer könnte dann durch Fingerauflegen vollzogen werden, wobei das Sicherheitsniveau jedoch gegenüber einer herkömmlichen Lösung deutlich erhöht ist.

Ein weiterer Erfindungsaspekt führt daher eine Zugangskontrollanordnung mit einem erfindungsgemäßen Lesegerät und einer Schließanlage ein, welche ausgebildet ist, Zutritt zu einem geschützten Bereich zu gewähren oder zu verweigern. Hierbei ist die Steuereinheit des Lesegeräts dazu ausgebildet ist, eine Schließanlage anzusteuern.

Die Erfindung betrifft außerdem ein Chipimplantat mit einer Sende/Empfangseinheit, einem Speicher und mit einer Steuereinheit ein. Die Sende/Empfangseinheit ist dazu ausgebildet, mit einem Lesegerät zu kommunizieren. Der Speicher ist dazu ausgebildet, eine biometrische Referenzinformation und ein Attribut zu speichern. Die Steuereinheit ist mit der Sende/Empfangseinheit und dem Speicher verbunden und dazu ausgebildet, über die Sende/Empfangseinheit einen Nachweis der biometrischen Schlüsselinformation zu empfangen, den empfangenen Nachweis der biometrischen Schlüsselinformation unter Verwendung der biometrischen Referenzinformation zu prüfen und das Attribut über die Sende/Empfangseinheit zu senden, wenn die Prüfung des Nachweises der empfangenen biometrischen Schlüsselinformation erfolgreich war, und andernfalls einen Zugriff auf das Attribut zu verweigern.

Das Chipimplantat kann außerdem dazu ausgebildet sein, über die Sende/Empfangseinheit einen in seinem Speicher zu speichernden Datensatzes zu empfangen und in seinem Speicher zu speichern. Hierbei gelten die oben gemachten Erläuterungen.

Weitere bevorzugte Ausführungsformen der Erfindung lassen sich der nachfolgenden Beschreibung entnehmen.

### Kurzbeschreibung der Figuren

Die Erfindung wird nachfolgend anhand von Abbildungen von Ausführungsbeispielen näher erläutert. Die Figuren zeigen:
- Fig. 1: ein Ausführungsbeispiel des erfindungsgemäßen Verfahrens als Flussdiagramm;
- Fig. 2: ein Ausführungsbeispiel einer Zugangskontrollanordnung mit einem erfindungsgemäßen Lesegerät als Blockdiagramm; und
- Fig. 3: ein Ausführungsbeispiel eines erfindungsgemäßen Chipimplantats als Blockdiagramm.

### Detaillierte Beschreibung der Erfindung

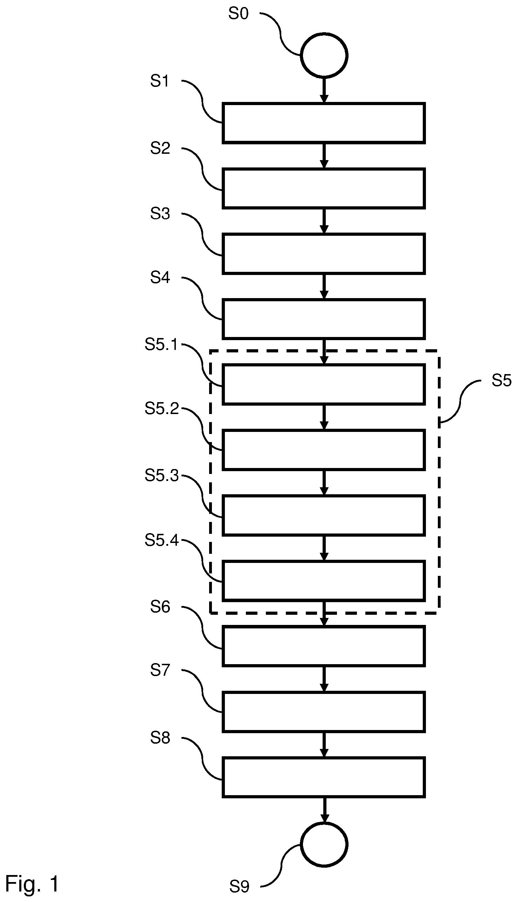

Figur 1 zeigt ein Ausführungsbeispiel des erfindungsgemäßen Verfahrens als Flussdiagramm. Das Verfahren beginnt in einem Startschritt S0, der beispielsweise durch eine Interaktion der zu authentifizierenden Person wie ein Auflegen eines Fingers auf eine Erfassungseinrichtung, ein Herantreten an ein Lesegerät oder dergleichen ausgelöst werden kann. In einem Schritt S1 wird ein biometrisches Merkmal der zu authentifizierenden Person erfasst. Im Rahmen der Erfindung können beispielsweise ein oder mehrere Fingerabdrücke, eine Iris, ein Gesicht oder eine Kombination mehrerer solcher Einzelmerkmale als biometrisches Merkmal erfasst werden. Das biometrische Merkmal der Person kann insbesondere photographisch erfasst werden.

In einem nachfolgenden Schritt S2 wird eine biometrische Schlüsselinformation aus dem erfassten biometrischen Merkmal abgeleitet, wobei die abgeleitete biometrische Schlüsselinformation im einfachsten Fall eine vollständige digitale Repräsentation des erfassten biometrischen Merkmals, wie sie im Schritt S1 erzeugt wurde, sein kann. Es ist aber auch vorstellbar, dass besonders kennzeichnende Teile des erfassten biometrischen Merkmals extrahiert werden, wie beispielsweise Verlaufsformen von Papillarleisten in einem erfassten Fingerabdruck, Abstände von Gesichtsmerkmalen und deren relative Verhältnisse zueinander, farbreduzierte oder kontrastveränderte Wiedergaben der Iris und dergleichen mehr. Diese Informationen können direkt als Schlüsselinformation oder aber beispielsweise für die Erzeugung einer pseudozufälligen Zahl verwendet werden. Hierzu kann die extrahierte Information als "Seed" eines festgelegten Pseudozufallsgenerators benutzt werden, wobei die Ausgabe des Pseudozufallsgenerators als abgeleitete biometrische Schlüsselinformation im Rahmen des erfindungsgemäßen Verfahrens verwendet wird.

Die derart abgeleitete biometrische Schlüsselinformation wird in einem anschließenden Schritt S3 an ein Chipimplantat der zu authentifizierenden Person nachgewiesen. Dies kann beispielsweise per kapazitiver, induktiver oder per Fernfeldübertragung geschehen. Allgemein kann die elektrische Versorgung des Chipimplantats während der Durchführung des Verfahrens über eine induktive Anregung durch ein erfindungsgemäßes Lesegerät erfolgen.

Die Kommunikation erfolgt hierbei bevorzugt kryptographisch abgesichert und kann beispielsweise eine Aushandlung von Sitzungsschlüsseln und sonstige bekannte kryptographische Verfahren beinhalten. Beispielsweise kann ein an das Basic Access Control-Protokoll angelehntes kryptographisches Verfahren verwendet werden.

Die abgeleitete biometrische Schlüsselinformation wird in einer Weise nachgewiesen, bei der die abgeleitete biometrische Schlüsselinformation nicht selbst übermittelt wird, sondern dem Chipimplantat deren korrektes Vorliegen im Lesegerät anhand eines übermittelten Datensatzes nachgewiesen wird. Hierzu ist z.B. denkbar, dass ein Challenge-Response-Verfahren eingesetzt wird, in dem das Chipimplantat eine Zufallszahl bestimmt und mit der im Chipimplantat vorhandenen Referenz des abgeleiteten biometrischen Schlüsselinformation (beziehungsweise bei Verwendung eines asymmetrischen Verschlüsselungsverfahren mit einem zugehörigen öffentlichen Schlüssel) verschlüsselt, an das Lesegerät übermittelt und sich von diesem die Zufallszahl zurückübertragen lässt, wodurch das Chipimplantat prüft, ob da Lesegerät über die für die erfolgreiche Entschlüsselung notwendige abgeleitete biometrische Schlüsselinformation verfügt.

Gelangt die Prüfung des Nachweises durch das Chipimplantat zu einem erfolgreichen Ergebnis, antwortet das Chipimplantat mit der Übermittlung eines in dem Chipimplantat gespeicherten Attributs. Demzufolge wird in einem auf den Schritt S3 folgenden Schritt ein Attribut empfangen und in Schritt S5 die eigentliche Authentifizierung der Person in Abhängigkeit von dem empfangenen Attribut durchgeführt.

Der Schritt S5 kann mehrere Teilschritte umfassen, die in einzelnen Ausführungsformen in unterschiedlicher Reihenfolge oder auch parallel zueinander ausgeführt werden können. Im gezeigten Ausführungsbeispiel umfasst der Schritt S5 vier Teilschritte, die jedoch in anderen Ausführungsbeispielen nicht zwingend vorhanden sein müssen. In einem Teilschritt S5.1 wird eine Signatur des empfangenen Attributs geprüft. Die Signatur kann nach bekannten kryptographischen Verfahren erstellt sein und nachweisen, dass das Attribut von einer autorisierten Instanz (z.B. Trustcenter) erstellt wurde. Auf diese Weise wird mit einfachen Mitteln sichergestellt, dass das Attribut nicht gefälscht ist. Beispielsweise kann die Signatur mit einem geheimen Schlüssel der autorisierten Instanz erstellt und mit einem im Lesegerät hinterlegten oder von diesem abfragbaren zugehörigen öffentlichen Schlüssel geprüft werden. Beispielsweise kann es sich um eine Signatur gemäß X.509 Version 3 handeln.

Wird die Signatur als ungültig befunden, gelangt die Authentifizierung zu einem negativen Ergebnis und das Verfahren wird abgebrochen und/oder es werden Alarmmaßnahmen eingeleitet. In Schritt S5.2 wird das empfangene Attribut mit einem vorherbestimmten Referenzattribut verglichen. Beispielsweise kann das Attribut unmittelbar anzeigen, dass die Person, die das Chipimplantat trägt, berechtigt ist, auf einen geschützten Bereich (virtuell oder physisch) zuzugreifen. In einem solchen Fall wird das Attribut also mit demjenigen Vorgabedatensatz verglichen, der eine solche Zugriffsberechtigung anzeigt. Das vorherbestimmte Referenzattribut kann aber auch als Teil eines Satzes von Referenzattributen gespeichert sein, welche alle mit dem empfangenen Attribut verglichen werden. So könnte das empfangene Attribut einen Namen oder eine Identifikationsnummer der zu authentifizierenden Person anzeigen und der Satz von Referenzattributen diejenigen Personen mit der notwendigen Berechtigung entsprechend bezeichnen.

In Schritt S5.3 kann das empfangene Attribut an ein Register übermittelt werden, beispielsweise an einen über ein Netzwerk erreichbaren Server wie ein Trustcenter und in Antwort hierauf in Schritt S5.4 ein Berechtigungssignal von dem Register empfangen werden. Dies kann dazu dienen, die Berechtigung der zu authentifizierenden Person von dem Register zu erfragen oder das Fortbestehen einer erteilten Berechtigung und durch das Attribut unmittelbar angezeigten Berechtigung zu prüfen. So könnte eine solche Berechtigung durch Hinterlegung eines Widerrufszertifikats in dem Register als ungültig gekennzeichnet werden. Liegt in dieser beispielhaften Ausführungsform ein solches Widerrufszertifikat in dem Register vor, antwortet das Register mit einem entsprechenden negativen Berechtigungssignal und die Authentifizierung scheitert, andernfalls mit einem positiven.

Nach erfolgreicher Authentifizierung in Schritt S5 wird in Schritt S6 ein Zugang zu einem geschützten Bereich freigegeben. Dieser geschützte Bereich kann physischer Natur sein, also beispielsweise ein Firmengelände, ein Schließfach oder ähnliches. Ebenso lassen sich die verschiedenen Aspekte der Erfindung aber auch auf geschützte Bereiche virtueller, also datentechnischer Natur anwenden. Beispiele hierfür wären bei einem Internetdienstleister geführte Konten wie Email- und Einkaufskonten oder aber auch Cloudspeicherbereiche oder geschützte Netzwerke wie z.B. für die Anlagensteuerung. Bei Zugriff auf einen physischen geschützten Bereich kann eine Schließanlage angesteuert werden (Schritt S7).

In einem optionalen Schritt S8 kann ein in dem Chipimplantat zu speichernder Datensatz an das Chipimplantat übermittelt werden. Dies kann beispielsweise dazu verwendet werden, zusätzliche Attribute wie einen Berechtigungsnachweis in dem Chipimplantat zu speichern. Ebenso ist denkbar, eine elektronische Quittung in Form des Datensatzes an das Chipimplantat zu übermitteln, so dass beispielsweise eine Zugriffshistorie der zu authentifizierenden Person anhand des Chipimplantats erstellt werden kann. Eine solche Quittung kann durch die zu authentifizierende Person auch dazu verwendet werden, die eigene Anwesenheit am Ort des verwendeten Lesegeräts zu einem bestimmten Zeitpunkt nachzuweisen. Anschließend wird das Verfahren in Schritt S9 beendet.

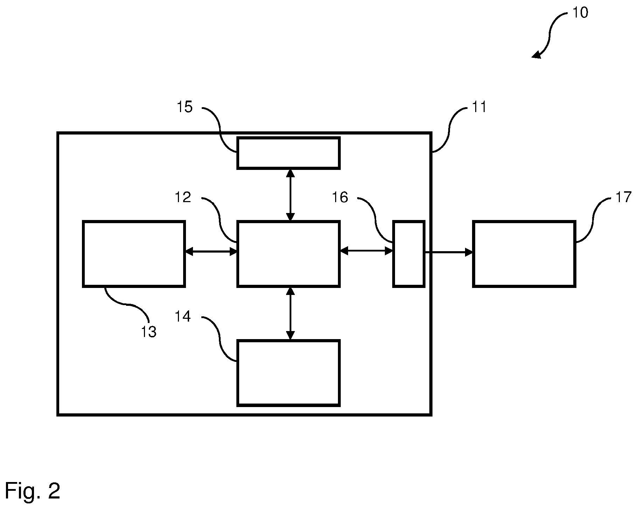

Figur 2 zeigt ein Ausführungsbeispiel einer Zugangskontrollanordnung 10 mit einem erfindungsgemäßen Lesegerät 11 als Blockdiagramm. Die erfindungsgemäße Zugangskontrollanordnung 10 verfügt in dem gezeigten Ausführungsbeispiel ein Lesegerät 11 und eine Schließanlage 17, welche von dem Lesegerät 11 gesteuert wird und abhängig von dieser Steuerung Zugang zu einem geschützten Bereich gewährt oder verweigert. Das Lesegerät 11 besitzt eine Steuereinheit 12, welche mit der Schließanlage 17 über eine Steuerschnittstelle 16 kommuniziert. Die Kommunikation kann drahtgebunden oder drahtlos und selbstredend kryptographisch abgesichert erfolgen. Die Steuereinheit 12 ist dazu ausgebildet, das erfindungsgemäße Verfahren durchzuführen.

Das Lesegerät 11 verfügt über eine Erfassungseinheit 13, die mit der Steuereinheit 12 verbunden ist und ein biometrisches Merkmal erfassen kann. Beispielsweise kann die Erfassungseinheit 13 eine Kamera oder ein Fingerabdrucksensor sein. Ferner besitzt das Lesegerät 11 eine mit der Steuereinheit 12 verbundene Sende/Empfangseinheit 14, welche für die Kommunikation mit dem Chipimplantat ausgebildet ist. Die Sende/Empfangseinheit 14 kann außerdem zusätzlich dazu ausgebildet sein, das Chipimplantat für die Dauer der Durchführung des erfindungsgemäßen Verfahrens mit Energie zu versorgen.

In dem gezeigten Ausführungsbeispiel besitzt das Lesegerät 11 zudem eine mit der Steuereinheit 12 verbundene Netzwerkschnittstelle 15, über welche die Steuereinheit 12 wie oben beschrieben mit einem Register kommunizieren kann.

Die Steuereinheit 12 kann ein Prozessor mit einem integrierten Speicher für die im Rahmen der Durchführung des erfindungsgemäßen Verfahrens zu verwendenden Daten und Programme sein, alternativ aber auch als festverdrahtete Logik aufgebaut werden.

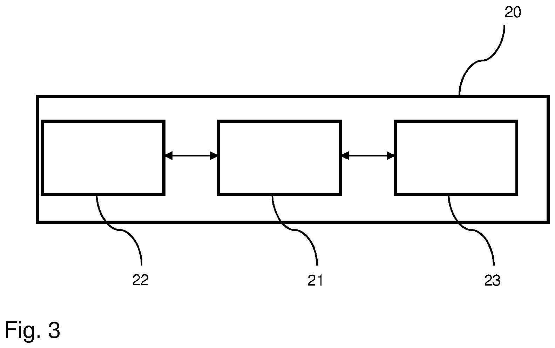

Figur 3 zeigt ein Ausführungsbeispiel eines erfindungsgemäßen Chipimplantats 20 als Blockdiagramm. Das Chipimplantat 20 besitzt eine Steuereinheit 21, einen mit der Steuereinheit 21 verbundenen Speicher 23 sowie eine mit der Steuereinheit 21 verbundene Sende/Empfangseinheit 22. Das Chipimplantat 20 ist dabei dazu ausgebildet, eine das Implantat tragende Person im Rahmen der hierin beschriebenen Verfahren auszuweisen. Das Chipimplantat 20 kann in bekannter Weise bioverträglich gekapselt sein und über eine Empfangseinheit zur drahtlosen Energieversorgung durch externe Anregung verfügen (nicht gezeigt).

### Bezugszeichenliste

- S0: Start
- S1: Erfassen eines biometrischen Merkmals einer Person
- S2: Ableiten einer biometrischen Schlüsselinformation aus dem erfassten biometrischen Merkmal
- S3: Nachweisen der biometrischen Schlüsselinformation gegenüber einem Chipimplantat der Person
- S4: Empfangen eines von dem Chipimplantat übermittelten Attributs der Person in Antwort auf die nachgewiesene biometrische Schlüsselinformation
- S5: Authentifizieren der Person in Abhängigkeit von dem empfangenen Attribut
- S5.1: Prüfen einer Signatur des empfangenen Attributs
- S5.2: Vergleichen des empfangenen Attributs mit einem vorherbestimmten Referenzattribut
- S5.3: Übermitteln des empfangenen Attributs an ein Register
- S5.4: Empfangen eines Berechtigungssignals von dem Register in Antwort auf das übermittelte empfangene Attribut
- S6: Freigeben eines Zugangs zu einem geschützten Bereich
- S7: Ansteuern einer Schließanlage
- S8: Übermitteln eines in dem Chipimplantat zu speichernden Datensatzes an das Chipimplantat
- S9: Ende

- 10: Zugangskontrollanordnung
- 11: Lesegerät
- 12: Steuereinheit
- 13: Erfassungseinheit
- 14: Sende/Empfangseinheit
- 15: Netzwerkschnittstelle
- 16: Steuerschnittstelle
- 17: Schließanlage

- 20: Chipimplantat
- 21: Steuereinheit
- 22: Sende/Empfangseinheit
- 23: Speicher

## Patentansprüche

1. Ein durch ein Lesegerät (11) durchgeführtes Verfahren für die Authentifizierung einer Person und mit den Schritten:
- Erfassen eines biometrischen Merkmals der Person (S1);
- Ableiten einer biometrischen Schlüsselinformation aus dem erfassten biometrischen Merkmal (S2);
- Nachweisen der biometrischen Schlüsselinformation gegenüber einem Chipimplantat (20) der Person (S3), wobei die abgeleitete biometrische Schlüsselinformation nicht selbst übermittelt wird, sondern dem Chipimplantat deren korrektes Vorliegen im Lesegerät anhand eines übermittelten Datensatzes nachgewiesen wird, insbesondere mittels eines Challenge-Response-Verfahrens;
- Empfangen eines von dem Chipimplantat (20) übermittelten Attributs der Person in Antwort auf die nachgewiesene biometrische Schlüsselinformation (S4); und
- Authentifizieren der Person in Abhängigkeit von dem empfangenen Attribut (S5).

2. Das Verfahren des vorhergehenden Anspruchs, mit einem zusätzlichen Schritt (S6) des Freigebens eines Zugangs zu einem geschützten Bereich, wenn der Schritt (S5) des Authentifizierens der Person erfolgreich abgeschlossen wurde.

3. Das Verfahren des vorhergehenden Anspruchs, bei dem der Schritt (S6) des Freigebens des Zugangs einen Schritt (S7) des Ansteuerns einer Schließanlage (17) beinhaltet.

4. Das Verfahren eines der vorhergehenden Ansprüche, bei dem der Schritt (S5) des Authentifizierens der Person einen zusätzlichen Schritt (S5.2) des Vergleichens des empfangenen Attributs mit einem vorherbestimmten Referenzattribut beinhaltet.

5. Das Verfahren eines der vorhergehenden Ansprüche, bei dem der Schritt (S5) des Authentifizierens der Person einen zusätzlichen Schritt (S5.1) des Prüfens einer Signatur des empfangenen Attributs beinhaltet.

6. Das Verfahren eines der vorhergehenden Ansprüche, bei dem der Schritt (S5) des Authentifizierens der Person einen zusätzlichen Schritt (S5.3) des Übermittelns des empfangenen Attributs an ein Register und einen zusätzlichen Schritt (S5.4) des Empfangens eines Berechtigungssignals von dem Register in Antwort auf das übermittelte empfangene Attribut beinhaltet, wobei der Schritt (S5) des Authentifizierens der Person in Abhängigkeit von dem empfangenen Berechtigungssignal erfolgt.

7. Das Verfahren eines der vorhergehenden Ansprüche, mit einem zusätzlichen Schritt (S8) des Übermittelns eines in dem Chipimplantat (20) zu speichernden Datensatzes an das Chipimplantat (20).

8. Ein Lesegerät (11) mit einer Erfassungseinheit (13), welche ausgebildet ist,
- ein biometrisches Merkmal einer Person zu erfassen, und
- ein Chipimplantat über eine induktive Anregung elektrisch zu versorgen,
wobei das Lesegerät zusätzlich
- eine Sende/Empfangseinheit (14), welche ausgebildet ist, mit einem Chipimplantat (20) der Person zu kommunizieren, und
- eine mit der Erfassungseinheit (13) und der Sende/Empfangseinheit (14) verbundene Steuereinheit (12) aufweist, und das Lesegerät (11) dazu ausgebildet ist, das Verfahren eines der vorhergehenden Ansprüche durchzuführen,
wobei der Nachweis der biometrischen Schlüsselinformation durch ein Challenge-Response-Verfahren erfolgt, und das Lesegerät (11) dazu ausgebildet ist, eine vom Chipimplantat unter Benutzung einer Referenz der abgeleiteten biometrischen Schlüsselinformation verschlüsselte Zufallszahl als Challenge zum empfangen, zu entschlüsseln und als Response zurück zu übertragen.

9. Eine Zugangskontrollanordnung (10) mit einem Lesegerät (11) gemäß dem vorhergehenden Anspruch und einer Schließanlage (17), welche ausgebildet ist, Zutritt zu einem geschützten Bereich zu gewähren oder zu verweigern, **dadurch gekennzeichnet, dass** die Steuereinheit (12) des Lesegeräts (11) dazu ausgebildet ist, das Verfahren des Anspruchs 3 auszuführen.

10. Ein Chipimplantat (20) mit einer Sende/Empfangseinheit (22), welche ausgebildet ist, mit einem Lesegerät (11) zu kommunizieren, wobei das Chipimplantat (20) dazu ausgebildet ist, von dem Lesegerät über induktive Anregung elektrisch versorgt zu werden und zusätzlich einen Speicher (23), welcher eine biometrische Referenzinformation und ein Attribut speichert, und eine Steuereinheit (21) aufweist, welche mit der Sende/Empfangseinheit (22) und dem Speicher (23) verbunden und dazu ausgebildet ist,
- unter Benutzung der biometrischen Referenzinformation eine Zufallszahl zu verschlüsseln,
- diese als Challenge an das Lesegerät zu übertragen,
- eine zurückübertragene Response zu empfangen,
- zu prüfen, ob das Lesegerät über die für die erfolgreiche Entschlüsselung notwendige abgeleitete biometrische Schlüsselinformation verfügt, und
- das Attribut über die Sende/Empfangseinheit (22) zu senden, wenn die Prüfung des Nachweises der empfangenen biometrischen Schlüsselinformation erfolgreich war, und andernfalls einen Zugriff auf das Attribut zu verweigern.

## Claims

1. A method for authenticating a person carried out by a reader (11) and comprising the steps of:
- detecting a biometric feature of the person (S1);
- deriving biometric key information from the detected biometric feature (S2);
- proving the biometric key information before a chip implant (20) of the person (S3), wherein the derived biometric key information is not transmitted itself, but the correct presence thereof in the reader is proved to the chip implant on the basis of a transmitted data record, in particular by means of a challenge-response method;
- receiving an attribute of the person transmitted by the chip implant (20) in response to the proved biometric key information (S4); and
- authenticating the person as a function of the received attribute (S5).

2. The method of the preceding claim, comprising an additional step (S6) of clearing access to a protected area if the step (S5) of authenticating the person has been successfully completed.

3. The method of the preceding claim, wherein the step (S6) of clearing access comprises a step (S7) of actuating a locking system (17).

4. The method of any one of the preceding claims, wherein the step (S5) of authenticating the person comprises an additional step (S5.2) of comparing the received attribute with a predetermined reference attribute.

5. The method of any one of the preceding claims, wherein the step (S5) of authenticating the person comprises an additional step (S5.1) of checking a signature of the received attribute.

6. The method of any one of the preceding claims, wherein the step (S5) of authenticating the person comprises an additional step (S5.3) of transmitting the received attribute to a register and an additional step (S5.4) of receiving an authorization signal from the register in response to the transmitted received attribute, wherein the step (S5) of authenticating the person is performed as a function of the received authorization signal.

7. The method of any one of the preceding claims, comprising an additional step (S8) of transmitting a data set to be stored in the chip implant (20) to the chip implant (20).

8. A reader (11) comprising a detection unit (13) which is configured to
- detect a biometric feature of a person, and
- electrically supply a chip implant via an inductive excitation,
wherein the reader additionally comprises
- a transceiver unit (14) which is configured to communicate with a chip implant (20) of the person, and
- a control unit (12) connected to the detection unit (13) and the transceiver unit (14),
and the reader is configured to carry out the method of any one of the preceding claims, wherein the biometric key information is proved by a challenge-response method, and the reader (11) is configured to receive a random number encrypted by the chip implant using a reference of the derived biometric key information as a challenge, to decrypt it and to transmit it back as a response.

9. An access control arrangement (10) comprising a reader (11) according to the preceding claim and a locking system (17) which is configured to grant or deny access to a protected area, **characterized in that** the control unit (12) of the reader (11) is configured to carry out the method of claim 3.

10. A chip implant (20) comprising a transceiver unit (22) which is configured to communicate with a reader (11), wherein the chip implant (20) is configured to be electrically supplied by the reader via inductive excitation and additionally comprises a memory (23) which stores biometric reference information and an attribute, and a control unit (21) which is connected to the transceiver unit (22) and the memory (23) and is configured to
- encrypt a random number using the biometric reference information,
- transmit it to the reader as a challenge,
- receive a response transmitted back,
- check whether the reader has the derived biometric key information necessary for the successful decryption, and
- transmit the attribute via the transceiver unit (22) if the check of the proof of the received biometric key information was successful, and otherwise to deny access to the attribute.

## Revendications

1. Procédé mis en oeuvre par un appareil de lecture (11) pour l'authentification d'une personne et comprenant les étapes consistant à :
- détecter une caractéristique biométrique de la personne (S1) ;
- dériver une information de clé biométrique à partir de la caractéristique biométrique détectée (S2) ;
- prouver l'information de clé biométrique vis-à-vis d'un implant de puce (20) de la personne (S3), l'information de clé biométrique dérivée n'étant pas transmise elle-même, mais la présence correcte de celle-ci dans l'appareil de lecture étant prouvée à l'implant de puce à l'aide d'un ensemble de données transmis, en particulier au moyen d'un procédé Challenge-Response ;
- recevoir un attribut de la personne transmis par l'implant de puce (20) en réponse à l'information de clé biométrique prouvée (S4) ; et
- authentifier la personne en fonction de l'attribut reçu (S5).

2. Procédé selon la revendication précédente, comprenant une étape supplémentaire (S6) de libération d'un accès à une zone protégée si l'étape (S5) d'authentification de la personne a été terminée avec succès.

3. Procédé selon la revendication précédente, dans lequel l'étape (S6) de libération de l'accès comprend une étape (S7) de commande d'un système de fermeture (17).

4. Procédé selon l'une quelconque des revendications précédentes, dans lequel l'étape (S5) d'authentification de la personne comprend une étape supplémentaire (S5.2) de comparaison de l'attribut reçu avec un attribut de référence prédéterminé.

5. Procédé selon l'une quelconque des revendications précédentes, dans lequel l'étape (S5) d'authentification de la personne comprend une étape supplémentaire (S5.1) de vérification d'une signature de l'attribut reçu.

6. Procédé selon l'une quelconque des revendications précédentes, dans lequel l'étape (S5) d'authentification de la personne comprend une étape supplémentaire (S5.3) de transmission de l'attribut reçu à un registre et une étape supplémentaire (S5.4) de réception d'un signal d'autorisation du registre en réponse à l'attribut reçu transmis, l'étape (S5) d'authentification de la personne étant effectuée en fonction du signal d'autorisation reçu.

7. Procédé selon l'une quelconque des revendications précédentes, comprenant une étape supplémentaire (S8) de transmission d'un ensemble de données à mémoriser dans l'implant de puce (20) à l'implant de puce (20).

8. Appareil de lecture (11) comprenant une unité de détection (13) qui est configurée pour
- détecter une caractéristique biométrique d'une personne, et
- alimenter électriquement un implant de puce par le biais d'une excitation inductive, l'appareil de lecture comprenant en outre
- une unité d'émission/réception (14) qui est configurée pour communiquer avec un implant de puce (20) de la personne, et
- une unité de commande (12) reliée à l'unité de détection (13) et à l'unité d'émission/réception (14),
et l'appareil de lecture étant configuré pour mettre en oeuvre le procédé selon l'une quelconque des revendications précédentes,
la preuve de l'information de clé biométrique étant effectuée par un procédé Challenge-Response, et l'appareil de lecture (11) étant configuré pour recevoir un nombre aléatoire crypté par l'implant de puce en utilisant une référence de l'information de clé biométrique dérivée en tant que Challenge, pour le décrypter et pour le retransmettre en tant que Réponse.

9. Agencement de contrôle d'accès (10) comprenant un appareil de lecture (11) selon la revendication précédente et un système de fermeture (17) qui est configuré pour accorder ou refuser l'accès à une zone protégée, **caractérisé en ce que** l'unité de commande (12) de l'appareil de lecture (11) est configurée pour mettre en oeuvre le procédé selon la revendication 3.

10. Implant de puce (20) comprenant une unité d'émission/réception (22) qui est configurée pour communiquer avec un appareil de lecture (11), l'implant de puce (20) étant configuré pour être alimenté électriquement par l'appareil de lecture par le biais d'une excitation inductive et comprenant en outre une mémoire (23) qui mémorise une information de référence biométrique et un attribut, et une unité de commande (21) qui est reliée à l'unité d'émission/réception (22) et à la mémoire (23) et est configurée pour
- crypter un nombre aléatoire en utilisant l'information de référence biométrique,
- la transmettre en tant que Challenge à l'appareil de lecture,
- recevoir une réponse retransmise,
- vérifier si l'appareil de lecture dispose de l'information de clé biométrique dérivée nécessaire au décryptage réussi, et
- transmettre l'attribut par le biais de l'unité d'émission/réception (22) si la vérification de la preuve de l'information de clé biométrique reçue a réussi, et sinon refuser un accès à l'attribut.
